# EUROPÄISCHE PATENTSCHRIFT

(11) **EP 3 747 687 B1**
(45) Veröffentlichungstag und Bekanntmachung des Hinweises auf die Patenterteilung: **18.11.2026**
(21) Anmeldenummer: 20172873.0
(22) Anmeldetag: 05.05.2020
(51) Int. Cl.: B60L 50/50, B60L 50/64, B60L 50/60, B60L 58/20, B60L 58/22

(54) **ELEKTRISCHES ENERGIESPEICHERSYSTEM UND VERFAHREN ZU DESSEN BETREIBEN**
ELECTRICAL ENERGY STORAGE SYSTEM AND METHOD FOR THE OPERATION THEREOF
SYSTÈME D'ACCUMULATION D'ÉNERGIE ÉLECTRIQUE ET SON PROCÉDÉ DE FONCTIONNEMENT

(30) Priorität: 06.06.2019 DE 102019208280
(43) Veröffentlichungstag der Anmeldung: 09.12.2020
(73) Patentinhaber: Robert Bosch GmbH, 70442 Stuttgart (DE)
(72) Erfinder: KRIEG, Berengar, 70839 Gerlingen (DE); STIMM, Frank, 71229 Leonberg (DE); MANTEL, Regine, 70193 Stuttgart (DE); FISCHER, Christoph, 70188 Stuttgart (DE)

(56) Entgegenhaltungen:
- EP-A1- 3 398 818
- WO-A1-2018/147542
- DE-A1- 102012 220 549
- US-A1- 2012 139 338
- US-A1- 2018 281 616

## Beschreibung

Die Erfindung geht aus von einem elektrischen Energiespeichersystem, einem Verfahren zum Betreiben eines elektrischen Energiespeichersystems, einer Verwendung des elektrischen Energiespeichersystems sowie einem Computerprogramm gemäß dem Oberbegriff der unabhängigen Ansprüche.

### Stand der Technik

In vielen Fahrzeugen mit Verbrennungsmotor wird zur CO2-Einsparung ein 48V-System zur Unterstützung des Verbrennungsmotors und für eine Energierückgewinnung in Schubphasen verwendet. Dieses 48V-System besteht aus einer an einen Triebstrang des Fahrzeugs gekoppelte elektrische Maschine und einem Batteriesystem mit einer Nominalspannung von 48V.

In (teil-)autonomen Fahrzeugen werden redundant versorgte Sensoren und Aktuatoren benötigt, um eine ASIL D konforme Funktionalität zu gewährleisten. Dies bedeutet, dass mindestens bis zur Übernahme durch den Fahrer oder bis zu Positionierung des autonomen Fahrzeugs in einem sicheren Bereich, das Fahrzeug auch bei Ausfall der Primärsysteme, zu steuern sein muss, insbesondere Lenkung, Bremse, Fahrzeugbeleuchtung.

Dazu wird oftmals ein separater Gleichspannungswandler genutzt, der aus dem 48V-System eine redundante 12V-Versorgung aufbaut

Das Dokument DE 10 2016 224 618 offenbart ein Fahrzeug-Bordnetz, umfassend ein erstes Teilnetz einer ersten Spannungsebene, ein zweites Teilnetz einer zweiten Spannungsebene und eine Anzahl an Verbrauchern. An das erste Teilnetz ist zumindest ein erster Energiespeicher angeschlossen zur Einspeisung von Energie und/oder zur Entnahme von Energie. An das zweite Teilnetz ist zumindest ein zweiter Energiespeicher angeschlossen zur Einspeisung von Energie und/oder zur Entnahme von Energie. Eine Teilanzahl der Anzahl an Verbrauchern ist mit dem ersten und mit dem zweiten Teilnetz koppelbar und in Abhängigkeit einer Betriebssituation aus dem ersten und/oder dem zweiten Teilnetz mit Energie versorgbar ist. Ferner ist ein drittes Teilnetz einer dritten Spannungsebene vorgesehen, die höher als die erste und die zweite Spannungsebene ist. An das dritte Teilnetz ist ein dritter Energiespeicher angeschlossen, der zumindest einen Teilabgriff umfasst, an dem, bezogen auf ein Bezugspotential des Fahrzeug-Bordnetzes, eine der ersten Spannungsebene entsprechende Spannung anliegt. Das erste Teilnetz ist mit dem Teilabgriff des dritten Energiespeichers verbunden, wodurch der erste Energiespeicher des ersten Teilnetzes durch einen Speicherabschnitt des dritten Energiespeichers bereitgestellt ist.

Das Dokument DE 10 2015 206 523 offenbart eine Energieversorgungsschaltung, insbesondere für Kraftfahrzeuge, mit einem elektrischen Hauptenergiespeicher mit mehreren in Reihe geschalteten Speichermodulen, und einer in einem Störungsfall zuschaltbaren Redundanzschaltung, welche eine Spannung eines einzigen der Speichermodule abgreift, um eine Notenergieversorgung sicherzustellen Darüber hinaus betrifft die Erfindung ein Kraftfahrzeug mit solch einer Energieversorgungsschaltung.

Das Dokument US 2012/139338 A1 offenbart ein Hochspannungssystem mit einer Hochspannungsbatterie für ein elektrisches Fahrzeug, welches den Entfall einer Hilfsbatterie ermöglicht, die herkömmlicherweise in solchen Systemen erforderlich ist. Wenn die Zündung aus ist, erfolgt eine Stromversorgung von elektrischen Niederspannungsverbrauchern mittels der Hochspannungsbatterie.

Das Dokument DE 10 2012 220 549 A1 offenbart ein Elektro-Transportmittel, insbesondere ein Elektrofahrzeug (10), umfassend eine Akkumulatoreinheit mit einem ersten Anschluss, einem zweiten Anschluss sowie einem dritten Anschluss, wobei ein Bordnetz mit dem dritten Anschluss verbindbar ist.

Das Dokument WO 2018/147542 A1 offenbart ein Stromversorgungssystem mit einem ersten Systemanschluss, einem zweiten Systemanschluss und einem drittem Systemanschluss.

Es ist Aufgabe der vorliegenden Erfindung, den Stand der Technik weiter zu verbessern. Diese Aufgabe wird gelöst durch die Merkmale der unabhängigen Ansprüche.

### Offenbarung der Erfindung

### Vorteile der Erfindung

Die Aufgabe wird erfindungsgemäß durch die Merkmale der unabhängigen Ansprüche gelöst. Dazu umfasst das elektrische Energiespeichersystem:
Eine Mehrzahl von elektrochemischen Energiespeichern, die mit primären Anschlusspolen des elektrischen Energiespeichersystems zum Bereitstellen einer primären elektrischen Spannung elektrisch verbindbar sind;
Sekundäre Anschlusspole zum Bereitstellen einer sekundären elektrischen Spannung, wobei die sekundären Anschlusspole mittels sekundärer Schalter mit Anschlusspolen einer elektrischen Energiequelle zum Bereitstellen einer Primärversorgung elektrisch verbindbar sind;
Mindestens einen ersten primären Schalter, der mit einer elektrischen Verbindung zwischen zwei der elektrochemischen Energiespeicher und mit einer elektrischen Verbindung zwischen einem ersten sekundären Schalter und einem ersten sekundären Anschlusspol elektrisch verbunden ist, wobei die zwischen der elektrischen Verbindung und einem zweiten primären Anschlusspol elektrisch verbundenen elektrochemischen Energiespeicher mittels dem ersten primären Schalter mit dem ersten sekundären Anschlusspol des elektrischen Energiespeichersystems zum Bereitstellen einer sekundären elektrischen Spannung, die niedriger als die primäre elektrische Spannung ist, elektrisch verbindbar sind;
Mindestens einen zweiten primären Schalter, der mit einer elektrischen Verbindung zwischen dem zweiten primären Anschlusspol und einer elektrischen Verbindung zwischen einem zweiten sekundären Schalter und einem zweiten sekundären Anschlusspol elektrisch verbunden ist, wobei der zweite primäre Anschlusspol mit dem zweiten sekundären Anschlusspol mittels dem zweiten primären Schalter elektrisch verbindbar ist.

Unter einem elektrischen Energiespeichersystem im Sinne der vorliegenden Erfindung ist ein Energiespeichersystem mit Energiespeichern zu verstehen, denen entweder elektrische Energie entnommen werden kann oder zugeführt und entnommen werden kann. Der Energiespeicher ist als Ladungsspeicher und/oder als magnetischer Energiespeicher und/oder elektrochemischer Energiespeicher ausgebildet. Ein elektrochemischer Energiespeicher ist insbesondere eine wiederaufladbare Batterie beziehungsweise ein Akkumulator.-Vorteilhafterweise ist der elektrochemische Energiespeicher eine Lithium-Ionen-, Lithium-Schwefel-, Lithium-Luft-Batterie und/oder eine Batterie mit einem Feststoffelektrolyten.

Weitere vorteilhafte Ausführungsformen sind Gegenstand der Unteransprüche.

Das elektrische Energiespeichersystem umfasst ferner:
Die Spannung eines jeden der elektrochemischen Energiespeicher liegt im Bereich 0,1 V ≤ X ≤ 60V, besonders bevorzugt im Bereich 2,8V ≤ X ≤ 4,2V. Vorteilhafterweise liegt bei einer Reihenschaltung von 12 elektrochemischen Energiespeichern eine Nominalspannung von 48V an, beispielsweise für ein 48V-System zur Unterstützung eines Verbrennungsmotors und zur Energierückgewinnung in Schubphasen eines Fahrzeugs mit dem elektrischen Energiespeichersystem.

Das Verfahren zum Betreiben eines elektrischen Energiespeichersystems umfasst folgende Schritte:
a) Erfassen einer Spannungsgröße, die eine elektrische Spannung der elektrischen Energiequelle repräsentiert;
b) Erzeugen einer Plausibilitätsinformation in Abhängigkeit eines Vergleichs der erfassten Spannungsgröße mit einem vorgegebenen Spannungsintervall, wobei die Plausibilitätsinformation eine unplausible Spannung repräsentiert, falls die Spannungsgröße außerhalb des Spannungsintervalls liegt;
c) Einleiten von Maßnahmen in Abhängigkeit der Plausibilitätsinformation, insbesondere bei einer unplausiblen Spannung, wobei die Maßnahmen ein Öffnen der sekundären Schalter zum Trennen der sekundären Anschlusspole und der elektrischen Energiequelle; ein Schließen des ersten primären Schalters, zum Bereitstellen einer sekundären elektrischen Spannung; und/oder ein Schließen des zweiten primären Schalters, zum Reduzieren eines Masse-Versatze zwischen dem zweiten primären Anschlusspol und dem zweiten sekundären Anschlusspol umfassen.

Vorteilhafterweise findet das erfindungsgemäße elektrische Energiespeichersystem Verwendung in elektrischen Energiespeichern für Elektrofahrzeuge, Hybridfahrzeuge, Plug-In-Hybridfahrzeuge, Luftfahrzeuge, Pedelecs oder E-Bikes, für portable Einrichtungen zur Telekommunikation oder Datenverarbeitung, für elektrische Handwerkzeuge oder Küchenmaschinen, sowie in stationären Speichern zur Speicherung insbesondere regenerativ gewonnener elektrischer Energie.

Gemäß einer vorteilhaften Ausgestaltung der Erfindung ist ein Computerprogramm vorgesehen, umfassend Befehle, die bewirken, dass das elektrische Energiespeichersystem die erfindungsgemäßen Verfahrensschritte ausführt.

Ferner ist ein maschinenlesbares Speichermedium vorgesehen, auf dem das Computerprogramm gespeichert ist.

### Kurzbeschreibung der Figuren

Ausführungsbeispiele der Erfindung sind in der Zeichnung dargestellt und in der nachfolgenden Beschreibung näher erläutert.

Es zeigen:
- Figur 1: eine schematische Darstellung einer Systemtopologie gemäß dem Stand der Technik; und
- Figur 2: eine schematische Darstellung einer Ausführungsform einer erfindungsgemäßen Systemtopologie; und
- Figur 3: eine schematische Darstellung einer Ausführungsform eines erfindungsgemäßen elektrochemischen Energiespeichersystems.

### Detaillierte Beschreibung der Ausführungsbeispiele

Gleiche Bezugszeichen bezeichnen in allen Figuren gleiche Vorrichtungskomponenten.

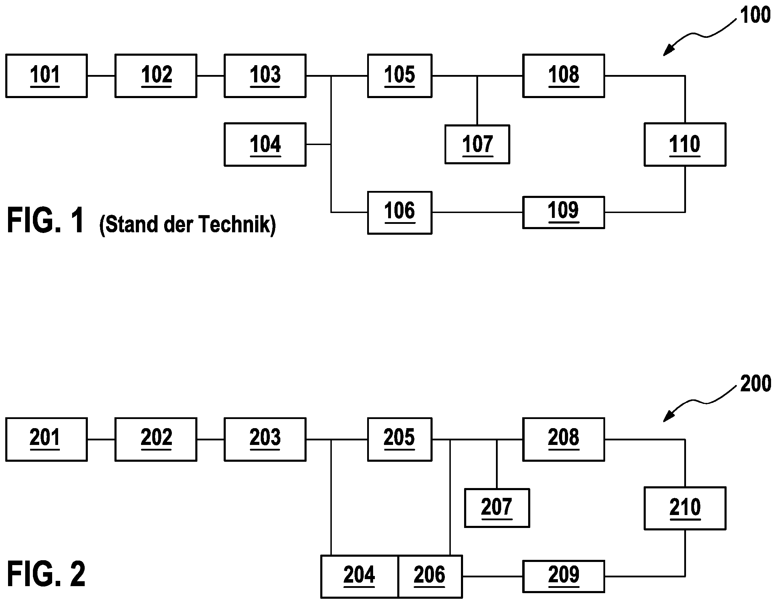

Figur 1 zeigt eine schematische Darstellung einer Systemtopologie 100 gemäß dem Stand der Technik. Die Systemtopologie 100 umfasst einen Verbrennungsmotor 101, eine elektrische Maschine 102, eine Leistungselektronik 103, einen 48 Volt-Energiespeicher 104, einen Gleichspannungswandler 105, einen mit dem Gleichspannungswandler 105 verbundenen 12 Volt-Energiespeicher 107 sowie primäre Sensoren und Aktoren 108, einen redundanten Gleichspannungswandler 106 zum Versorgen von redundanten Sensoren und Aktoren 109 sowie Primärsysteme 110, beispielsweise Bremsanlage, Lenksystem und/oder Lichtsystem.

Figur 2 zeigt eine schematische Darstellung einer Systemtopologie 200, die ein mögliches Einsatzumfeld des beanspruchten elektrischen Energiespeichersystems veranschaulicht. Die Systemtopologie 200 umfasst einen Verbrennungsmotor 201, eine elektrische Maschine 202, eine Leistungselektronik 203, einen 48 Volt-Energiespeicher 204, einen Gleichspannungswandler 205, einen mit dem Gleichspannungswandler 205 verbundenen 12 Volt-Energiespeicher 207 sowie primäre Sensoren und Aktoren 208. Mittels einer redundanten elektronischen Schaltung 206 kann an sekundären Anschlusspolen des Energiespeichers 204 eine 12 Volt-Spannung für redundante Sensoren und Aktoren 209 sowie Primärsysteme 210 bereitgestellt werden.

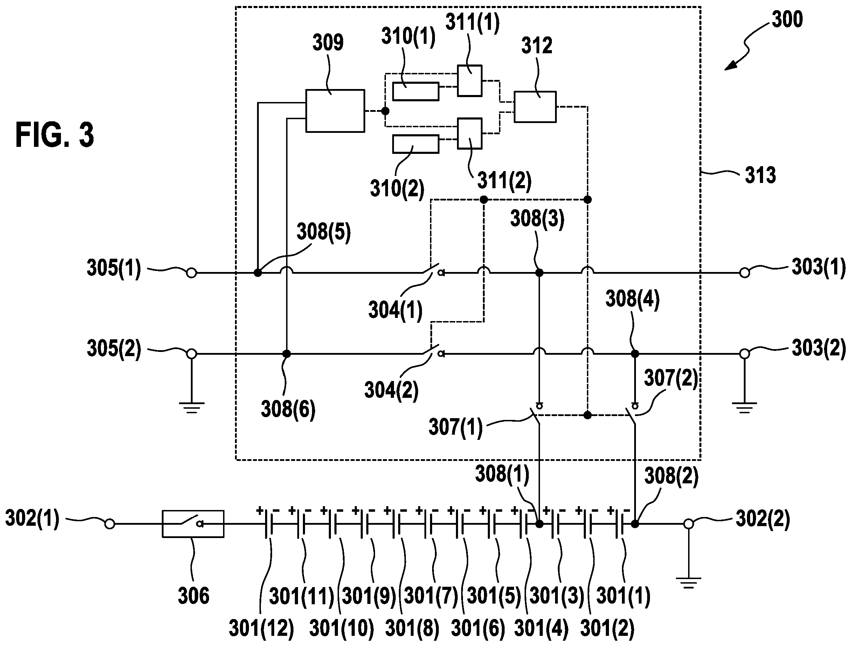

Figur 3 zeigt eine schematische Darstellung einer Ausführungsform eines erfindungsgemäßen elektrochemischen Energiespeichersystems 300. Das elektrochemische Energiespeichersystem 300 umfasst eine Mehrzahl von elektrochemischen Energiespeichern 301(1), 301(2), ... 301(12), die mit primären Anschlusspolen 302 des elektrochemischen Energiespeichersystems 300 elektrisch verbindbar sind, beispielsweise mittels eines Schalters 306 oder Relais. Ein zweiter primärer Anschlusspol 302(2) ist mit einem ersten Masseanschluss elektrisch verbunden.

In der gezeigten Ausführungsform weist das elektrochemische Energiespeichersystem eine Serienschaltung der elektrochemischen Energiespeichern 301(1), 301(2), ... 301(12) auf, wobei die Anzahl je nach Energiespeichersystem 300 variieren kann. Die elektrochemischen Energiespeichern 301(1), 301(2), ... 301(12) weisen je nach Ladungs- und Belastungszustand jeweils eine elektrische Spannung zwischen 2,8 Volt und 4,2 Volt auf. Eine Reihenschaltung von jeweils 3 Energiespeichern 301 weist demgemäß eine elektrische Spannung auf, die zur Versorgung eines 12V-Netzes geeignet ist, beispielsweise zur Versorgung eines redundanten Sensor-Aktor-Verbunds an sekundären Anschlusspolen 303.

Drei benachbarte Energiespeicher 301, beispielsweise die dem zweiten primären Anschlusspol 302(2) am nächsten verschaltete Energiespeicher 301(1), 301(2), 301(3), werden genutzt, um die Versorgung des redundanten Sensor-Aktor-Verbunds zu gewährleisten. Da der redundante Sensor-Aktor-Verbund auch in einem Normalbetrieb, also nicht nur im Falle des Ausfalls der Primärversorgung, arbeiten muss, kann die redundante Versorgung nicht dauerhaft aus diesen drei Energiespeichern 301(1), 301(2), 301(3) erfolgen, da es sonst zu einer dauerhaften Entladung dieser Energiespeichern 301(1), 301(2), 301(3) kommt.

Die Energiespeicher 301 werden jedoch über die primären Anschlusspole 302 nachgeladen, beispielsweise über ein 48V-Netz, aber nur in dem Maße, wie Ladung in die restlichen elektrisch in Serie geschalteten Energiespeicher 301(1), 301(2), 301(3) Ladung aufnehmen können. Es kommt also zu einem Ungleichgewicht von elektrischen Spannungen der elektrochemischen Energiespeicher 301 in einem Maße, für das eine Ladezustandsausgleichsschaltung des elektrochemischen Energiespeichersystems 300 klassisch nicht ausgelegt ist.

Da eine Versorgung des redundanten Sensor-Aktor-Verbunds nur im Falle des Ausfalles und dann nur zeitlich begrenzt unabhängig von der Primärversorgung aufrechterhalten werden muss, kann ein unterschiedlicher Ladezustand zwischen den Energiespeichern 301 toleriert werden.

In einem Normalbetrieb wird die Primärversorgung, beispielsweise eine elektrische Energiequelle als 12V-Primärversorgung, an Anschlusspolen 305(1), 305(2) auf ein redundantes Netz, beispielsweise ein redundantes 12V-Netz, mit sekundären Anschlusspolen 303(1), 303(2) des Energiespeichersystems 300 durchgeschaltet. Dazu können sekundäre Schalter 304(1), 304(2) genutzt werden, die beispielsweise im inaktiven Zustand geschlossen sind ("Öffner").

Durch eine Überwachungsschaltung 313, die in Elektronik-Hardware oder auch SW-unterstützt umgesetzt werden kann, wird eine elektrische Spannung der Primärversorgung überwacht. Wird erkannt, dass ein Fehler in der Primärversorgung vorliegt, beispielsweise durch Erzeugen einer Plausibilitätsinformation 312 in Abhängigkeit eines Vergleichs 311(1), 311(2) einer zwischen elektrischen Verbindungen 308(5), 308(6) erfassten Spannungsgröße 309, die eine elektrische Spannung der elektrischen Energiequelle repräsentiert, mit einem vorgegebenen Spannungsintervall 310, insbesondere wenn eine obere Spannungsgrenze 310(1) überschritten oder eine untere Spannungsgrenze 310(2) unterschritten wird, werden die beiden sekundären Schalter 304(1), 304(2), welche die Anschlusspole 305(1), 305(2) der Primärversorgung und die sekundären Anschlusspole 303(1), 303(2) elektrisch verbinden, geöffnet, um einen Fehler nicht in das redundante Netz zu übertragen.

Gleichzeitig wird ein erster primärer Schalter 307(1), der mit einer elektrischen Verbindung 308(1) zwischen zwei der elektrochemischen Energiespeicher 301(3), 301(4) und mit einer elektrischen Verbindung 308(3) zwischen einem ersten sekundären Schalter 304(1) und einem ersten sekundären Anschlusspol 303(1) elektrisch verbunden ist, und der beispielsweise im inaktiven Zustand geöffnet ist ("Schließer"), geschlossen, um das redundante Netz aus den drei Energiespeichern 301(1), 301(2), 301(3), die direkt mit dem zweiten primären Anschlusspol 302(2), beispielsweise dem 48V-Minuspol, verbunden sind, zu speisen.

Die elektrische Verbindung 308(1) ist in weiteren vorteilhaften Ausführungsformen zwischen zwei anderen elektrochemischen Energiespeichern 301(1) und 301(12) angeordnet, wenn:
die Primärversorgung eine elektrische Energiequelle mit einer von 12V abweichenden Primärversorgung aufweist; und/oder
die Spannung eines jeden der elektrochemischen Energiespeicher 301 außerhalb des besonders bevorzugten Bereichs 2,8V ≤ X ≤ 4,2V liegt, beispielsweise im Bereich 0,1V ≤ X ≤ 60V; und/oder
das elektrische Energiespeichersystem eine andere Anzahl von elektrochemischen Energiespeichern 301 als in der gezeigten Ausführungsform umfasst.

So ist in einer alternativen Ausführungsform die elektrische Verbindung 308(1) beispielsweise zwischen den elektrochemischen Energiespeichern 301(1) und 301(2) bzw. 301(2) und 301(3) angeordnet, wenn die Spannung eines jeden der elektrochemischen Energiespeicher 301 oberhalb des besonders bevorzugten Bereichs 2,8V ≤ X ≤ 4,2V liegt.

In einer weiteren alternativen Ausführungsform ist die elektrische Verbindung 308(1) beispielsweise zwischen den elektrochemischen Energiespeichern 301(4) und 301(5) bzw. 301(5) und 301(6) bzw. 301(11) und 301(12) angeordnet, wenn die Spannung eines jeden der elektrochemischen Energiespeicher 301 unterhalb des besonders bevorzugten Bereichs 2,8V ≤ X ≤ 4,2V liegt.

Das elektrochemische Energiespeichersystem 300 weist ferner einen zweiten primären Schalter 307(2) auf, der mit einer elektrischen Verbindung 308(2) zwischen dem zweiten primären Anschlusspol 302(2) und einer elektrischen Verbindung 308(4) zwischen einem zweiten sekundären Schalter 304(2) und einem zweiten sekundären Anschlusspol 303(2) elektrisch verbunden ist, wobei der zweite primäre Anschlusspol 302(2) mit dem zweiten sekundären Anschlusspol 303(2) mittels dem zweiten primären Schalter 307(2) elektrisch verbindbar ist, um einen Masse-Versatz zwischen dem zweiten primären Anschlusspol 302(2) und dem Potential des zweiten sekundären Anschlusspol 303(2) zu minimieren.

In einer Weiterbildung des Energiespeichersystems gemäß Anspruch 1 wird zusätzlich überwacht, ob ein definierter Systemstart vorliegt, beispielsweise Start eines Verbrennungsmotors des Fahrzeugs. Erst nach Vorliegen eines definierten Systemstarts wird von der Primärversorgung auf die redundante Versorgung umgeschaltet. Dadurch wird verhindert, dass im abgeschalteten Betrieb auf die redundante Versorgung umgeschaltet wird, beispielsweise durch Abklemmen einer 12V-Batterie des Fahrzeugs, die zur 12V-Primärversorgung dient. Vorteilhafterweise wird von der redundanten Versorgung auf die Primärversorgung umgeschaltet, wenn sichergestellt ist, dass die Primärversorgung wieder stabil ist und die redundante Versorgung nicht mehr benötigt wird. Auf ein separates Massenetz der redundanten Sensoren und Aktoren kann verzichtet werden. Vorteilhafterweise wird auch die Versorgung eines Batteriemanagementsystems des Energiespeichersystems 300 sichergestellt.

## Patentansprüche

1. Elektrisches Energiespeichersystem (300) umfassend:
Eine Mehrzahl von elektrochemischen Energiespeichern (301), die mit primären Anschlusspolen (302) des elektrischen Energiespeichersystems (300) zum Bereitstellen einer primären elektrischen Spannung elektrisch verbindbar sind;
Sekundäre Anschlusspole (303) zum Bereitstellen einer sekundären elektrischen Spannung, wobei die sekundären Anschlusspole (303) mittels sekundärer Schalter (304) mit Anschlusspolen (305) einer elektrischen Energiequelle zum Bereitstellen einer Primärversorgung elektrisch verbindbar sind;
Mindestens einen ersten primären Schalter (307(1)), der mit einer elektrischen Verbindung (308(1)) zwischen zwei der elektrochemischen Energiespeicher (301(1) bis 301 (12)) und mit einer elektrischen Verbindung (308(3)) zwischen einem ersten sekundären Schalter (304(1)) und einem ersten sekundären Anschlusspol (303(1)) elektrisch verbunden ist, wobei die zwischen der elektrischen Verbindung (308(1)) und einem zweiten primären Anschlusspol (302(2)) elektrisch verbundenen elektrochemischen Energiespeicher (301(1), 301(2), 301 (3)) mittels dem ersten primären Schalter (307(1)) mit dem ersten sekundären Anschlusspol (303(1)) des elektrischen Energiespeichersystems (300) zum Bereitstellen einer sekundären elektrischen Spannung, die niedriger als die primäre elektrische Spannung ist, elektrisch verbindbar sind;
Mindestens einen zweiten primären Schalter (307(2)), der mit einer elektrischen Verbindung (308(2)) zwischen dem zweiten primären Anschlusspol (302(2)) und einer elektrischen Verbindung (308(4)) zwischen einem zweiten sekundären Schalter (304(2)) und einem zweiten sekundären Anschlusspol (303(2)) elektrisch verbunden ist, wobei der zweite primäre Anschlusspol (302(2)) mit dem zweiten sekundären Anschlusspol (303(2)) mittels dem zweiten primären Schalter (307(2)) elektrisch verbindbar ist.

2. Elektrisches Energiespeichersystem (300) gemäß Anspruch 1, wobei die Spannung eines jeden der elektrochemischen Energiespeicher (301) im Bereich 0,1V ≤ X ≤ 60V, besonders bevorzugt im Bereich 2,8V ≤ X ≤ 4,2V, liegt.

3. Verfahren zum Betreiben eines elektrischen Energiespeichersystems (300) gemäß einem der vorhergehenden Ansprüche, umfassend folgende Schritte:
Erfassen einer Spannungsgröße (309), die eine elektrische Spannung der elektrischen Energiequelle repräsentiert;
Erzeugen einer Plausibilitätsinformation (312) in Abhängigkeit eines Vergleichs (311) der erfassten Spannungsgröße (309) mit einem vorgegebenen Spannungsintervall (310), wobei die Plausibilitätsinformation (312) eine unplausible Spannung repräsentiert, falls die Spannungsgröße außerhalb des Spannungsintervalls liegt;
Einleiten von Maßnahmen in Abhängigkeit der Plausibilitätsinformation (312), insbesondere bei einer unplausiblen Spannung, wobei die Maßnahmen ein Öffnen der sekundären Schalter (304) zum Trennen der sekundären Anschlusspole (303) und der elektrischen Energiequelle; ein Schließen des ersten primären Schalters (307(1)), zum Bereitstellen einer sekundären elektrischen Spannung; und/oder ein Schließen des zweiten primären Schalters (307(2)), zum Reduzieren eines Masse-Versatzes zwischen dem zweiten primären Anschlusspol (302(2)) und dem zweiten sekundären Anschlusspol (303(2)) umfassen.

4. Verwendung eines elektrischen Energiespeichersystems (300) gemäß einem der Ansprüche 1 oder 2 in elektrischen Energiespeichern für Elektrofahrzeuge, Hybridfahrzeuge, Plug-In-Hybridfahrzeuge, Luftfahrzeuge, Pedelecs oder E-Bikes, für portable Einrichtungen zur Telekommunikation oder Datenverarbeitung, für elektrische Handwerkzeuge oder Küchenmaschinen, sowie in stationären Speichern zur Speicherung insbesondere regenerativ gewonnener elektrischer Energie.

5. Computerprogramm, umfassend Befehle, die bewirken, dass das elektrische Energiespeichersystem (300) gemäß einem der Ansprüche 1 oder 2 die Verfahrensschritte nach Anspruch 3 ausführt.

6. Maschinenlesbares Speichermedium, auf dem das Computerprogramm nach Anspruch 5 gespeichert ist.

## Claims

1. Electrical energy storage system (300) comprising:
a plurality of electrochemical energy stores (301) which are able to be electrically connected to primary connection poles (302) of the electrical energy storage system (300) in order to provide a primary voltage;
secondary connection poles (303) for providing a secondary voltage, wherein the secondary connection poles (303) are able to be electrically connected to connection poles (305) of an electrical energy source by means of secondary switches (304) in order to provide a primary power supply;
at least one first primary switch (307(1)), which is electrically connected to an electrical connection (308(1)) between two of the electrochemical energy stores (301 (1) to 301 (12)) and to an electrical connection (308(3)) between a first secondary switch (304(1)) and a first secondary connection pole (303(1)), wherein the electrochemical energy stores (301(1), 301(2), 301(3)) electrically connected between the electrical connection (308(1)) and a second primary connection pole (302(2)) are able to be electrically connected to the first secondary connection pole (303(1)) of the electrical energy storage system (300) by means of the first primary switch (307(1)) in order to provide a secondary voltage which is lower than the primary voltage;
at least one second primary switch (307(2)), which is electrically connected to an electrical connection (308(2)) between the second primary connection pole (302(2)) and an electrical connection (308(4)) between a second secondary switch (304(2)) and a second secondary connection pole (303(2)), wherein the second primary connection pole (302(2)) is able to be electrically connected to the second secondary connection pole (303(2)) by means of the second primary switch (307(2)).

2. Electrical energy storage system (300) according to Claim 1, wherein the voltage of each of the electrochemical energy stores (301) is in the range 0.1 V ≤ X ≤ 60 V, particularly preferably in the range 2.8 V ≤ X ≤ 4.2 V.

3. Method for operating an electrical energy storage system (300) according to either of the preceding claims, comprising the following steps:
detecting a voltage variable (309) which represents a voltage of the electrical energy source;
generating plausibility information (312) on the basis of a comparison (311) of the detected voltage variable (309) with a predefined voltage range (310), wherein the plausibility information (312) represents an implausible voltage if the voltage variable is outside the voltage range;
initiating measures on the basis of the plausibility information (312), in particular in the case of an implausible voltage, wherein the measures comprise opening the secondary switches (304) in order to disconnect the secondary connection poles (303) and the electrical energy source; closing the first primary switch (307(1)) in order to provide a secondary voltage; and/or closing the second primary switch (307(2)) in order to reduce an earth offset between the second primary connection pole (302(2)) and the second secondary connection pole (303(2)).

4. Use of an electrical energy storage system (300) according to either of Claims 1 and 2 in electrical energy stores for electric vehicles, hybrid vehicles, plug-in hybrid vehicles, aircraft, pedelecs or e-bikes, for portable devices for telecommunications or data processing, for electrical handtools or kitchen appliances, and in stationary stores for storing in particular regeneratively obtained electrical energy.

5. Computer program comprising commands which cause the electrical energy storage system (300) according to either of Claims 1 and 2 to carry out the method steps according to Claim 3.

6. Machine-readable storage medium on which the computer program according to Claim 5 is stored.

## Revendications

1. Système d'accumulation d'énergie électrique (300), comprenant :
une pluralité d'accumulateurs d'énergie électrochimiques (301) qui peuvent être raccordés électriquement à des bornes de raccordement primaires (302) du système d'accumulation d'énergie électrique (300) pour fournir une tension électrique primaire ;
des bornes de raccordement secondaires (303) pour fournir une tension électrique secondaire, les bornes de raccordement secondaires (303) pouvant être raccordées électriquement au moyen d'un commutateur secondaire (304) à des bornes de raccordement (305) d'une source d'énergie électrique pour fournir une alimentation primaire ;
au moins un premier commutateur primaire (307(1)) qui est raccordé électriquement à une connexion électrique (308(1)) entre deux des accumulateurs d'énergie électrochimiques (301(1) à 301(12)) et à une connexion électrique (308(3)) entre un premier commutateur secondaire (304(1)) et une première borne de raccordement secondaire (303(1)), les accumulateurs d'énergie électrochimiques (301(1), 301(2), 301(3)) raccordés électriquement entre la connexion électrique (308(1)) et une deuxième borne de raccordement primaire (302(2)) pouvant être raccordés électriquement au moyen du premier commutateur primaire (307(1)) à la première borne de raccordement secondaire (303(1)) du système d'accumulation d'énergie électrique (300) pour fournir une tension électrique secondaire qui est inférieure à la tension électrique primaire ;
au moins un deuxième commutateur primaire (307(2)) qui est raccordé électriquement à une connexion électrique (308(2)) entre la deuxième borne de raccordement primaire (302(2)) et une connexion électrique (308(4)) entre un deuxième commutateur secondaire (304(2)) et une deuxième borne de raccordement secondaire (303(2)), la deuxième borne de raccordement primaire (302(2)) pouvant être raccordée électriquement à la deuxième borne de raccordement secondaire (303(2)) au moyen du deuxième commutateur primaire (307(2)).

2. Système d'accumulation d'énergie électrique (300) selon la revendication 1, dans lequel la tension de chacun des accumulateurs d'énergie électrochimiques (301) se situe dans la plage de 0,1 V ≤ X ≤ 60 V, et de manière particulièrement préférée dans la plage de 2,8 V ≤ X ≤ 4,2 V.

3. Procédé permettant de faire fonctionner un système d'accumulation d'énergie électrique (300) selon l'une quelconque des revendications précédentes, comprenant les étapes suivantes consistant à :
détecter une grandeur de tension (309) représentant une tension électrique de la source d'énergie électrique ;
générer une information de plausibilité (312) en fonction d'une comparaison (311) de la grandeur de tension détectée (309) avec un intervalle de tension prédéterminé (310), l'information de plausibilité (312) représentant une tension non plausible si la grandeur de tension se situe en dehors de l'intervalle de tension ;
mettre en œuvre des mesures en fonction de l'information de plausibilité (312), en particulier dans le cas d'une tension non plausible, les mesures comprenant une ouverture des commutateurs secondaires (304) pour séparer les bornes de raccordement secondaires (303) et la source d'énergie électrique ; une fermeture du premier commutateur primaire (307(1)) pour fournir une tension électrique secondaire ; et/ou une fermeture du deuxième commutateur primaire (307(2)) pour réduire un décalage de masse entre la deuxième borne de raccordement primaire (302(2)) et la deuxième borne de raccordement secondaire (303(2)).

4. Utilisation d'un système d'accumulation d'énergie électrique (300) selon l'une quelconque des revendications 1 ou 2 dans des accumulateurs d'énergie électrique pour des véhicules électriques, des véhicules hybrides, des véhicules hybrides rechargeables, des aéronefs, des pedelecs ou vélos électriques, pour des dispositifs portatifs servant aux télécommunications ou au traitement de données, pour des outils à main électriques ou des appareils électroménagers, ainsi que dans des accumulateurs stationnaires pour le stockage d'énergie électrique, produite en particulier par régénération.

5. Programme informatique comprenant des instructions qui amènent le système d'accumulation d'énergie électrique (300) selon l'une quelconque des revendications 1 ou 2 à exécuter les étapes du procédé selon la revendication 3.

6. Support de stockage lisible par machine, sur lequel est stocké le programme informatique selon la revendication 5.
